# EUROPÄISCHE PATENTSCHRIFT

(11) **EP 2 309 354 B1**
(45) Veröffentlichungstag und Bekanntmachung des Hinweises auf die Patenterteilung: **20.03.2013**
(21) Anmeldenummer: 09171952.6
(22) Anmeldetag: 01.10.2009
(51) Int. Cl.: G05B 19/05

(54) **Vorrichtung und Verfahren zur Simulation**
Device and method for simulation
Dispositif et procédé destinés à la simulation

(43) Veröffentlichungstag der Anmeldung: 13.04.2011
(73) Patentinhaber: Siemens Aktiengesellschaft, 80333 München (DE)
(72) Erfinder: Fischer, Richard, 90592 Schwarzenbruck (DE); Schaan, Stefan, 90592 Schwarzenbruck-Pfeifferhütte (DE)

(56) Entgegenhaltungen:
- EP-A1- 1 898 282
- DE-A1- 10 332 793
- Melsoft: "GX Simulator Version 6" Februar 2003 (2003-02), XP002573386 Gefunden im Internet: URL:http://www.scantime.co.uk/_docs/Mi/Gx% 20Simulator.pdf> [gefunden am 2010-03-16]

## Beschreibung

Die Erfindung betrifft eine Vorrichtung zum Zugriff auf eine Steuerung, wobei in der Steuerung ein erstes Steuerprogramm zur Steuerung eines Prozesses abläuft und der Prozess durch ein Prozessabbild von ersten Eingangssignalen, welche die Steuerung empfängt, und ersten Ausgangssignalen, welche die Steuerung an den Prozess ausgibt, aktiv gesteuert ist, umfassend eine Schnittstelle zum Datenaustausch mit der Steuerung, eine Recheneinheit zum Ausführen von Programmcodeanweisungen eines zweiten Steuerprogramms, weiterhin ausgestaltet, das über die Schnittstelle das Prozessabbild der ersten Eingangssignale dem zweiten Steuerprogramm als Eingangsgrößen zuleitbar sind.

Weiterhin betrifft die Erfindung ein Verfahren zur Simulation eines Steuerprogramms zum Ablauf in einer Steuerung zur Steurung eines Prozesses.

Bei der Steuerung von beispielsweise industriellen Prozessen mittels speicherpogrammierbarer Steuerungen gibt es im laufenden Betrieb von Prozessen oder industriellen Anlagen nur sehr eingeschränkte Möglichkeiten die Auswirkungen von Modifikationen an Steuerprogrammen auf den realen Ablauf bzw. den Prozess einzuschätzen. So besteht in einer Modifikation eines Steuerprogramms ein Risiko, dass es zu ungewollten Reaktionen oder zu Stillständen der industriellen Anlage kommen kann, wenn ein modifiziertes Steuerprogramm in die Steuerung geladen wird und die Steuerung des Prozesses übernimmt. Insbesondere bei Anlagen bzw. Prozessen der Öl- und Gasbranche oder der Chemieindustrie, welche auf einen kontinuierlichen Betrieb und eine hohe Verfügbarkeit ausgelegt sind, besteht ein hoher Bedarf dieses Risiko zu minimieren.

Nach dem Stand der Technik ist es bekannt, ein modifiziertes Steuerprogramm zu simulieren. Dabei wird der zu steuernde Prozess bzw. die Anlage auch anhand einer Simulation nachgebildet. Zielsetzung dieser Art der Simulation ist es, ein Steuerprogramm bereits vor dem Ablauf in einer real existierenden Anlage (Offline) zu testen. Diese Art der Simulation hat den Nachteil, dass die Auswirkungen der Modifikation nicht realitätsnah nachgebildet werden kann. Daraus folgt, dass die Effekte der Modifikation nicht zuverlässig beurteilt werden können. Auch dynamische Reaktionen oder Veränderungen von Ablaufzeiten sind schwer einzuschätzen. Infolge dessen, ist eine Aussage über das Ablaufverhalten des modifizierten Programms auf einer real existierenden Anlage, die gleichen Effekte zeigen bzw. die gewünschten Verbesserung mit sich bringen soll, nicht verlässlich.

In dem Internetdokument Melsoft: "GX Simulator Version 6", Februar 2003 (2003-02), http://www.scantime.co.uk/_docs/Mi/Gx%20.Simulator.pdf, wird ein derartiger Offline Simulator vorgestellt. Demnach ist es möglich schon vor der Inbetriebnahme eines Steuerungsprogramms und einer Steuerung schon alle wichtigen Funktionen des Steuerungsprogramms zu testen.

Aus der EP 1 646 946 B1 ist eine Vorrichtung zum Zugriff auf eine Steuerung bekannt. Diese Vorrichtung und ein zugehöriges Verfahren ermöglichen es, die Prüfung eines Steuerprogrammes in einer speicheprogrammierbaren Steuerung zu vereinfachen. Dabei ist eine speicherprogrammierbare Steuerung mit einem ersten Steuerprogramm geladen und ein Rechnersystem mit einem zum ersten Steuerprogramm identischen zweiten Steuerprogramm geladen.

Es ist die Aufgabe der vorliegenden Erfindung eine Simulation bzw. eine Vorrichtung nach dem Stand der Technik derart zu verbessern, dass Auswirkungen einer Modifikation an einem Steuerprogramm, wie sie sich auf einen realen Prozess auswirken, im Vorfeld besser eingeschätzt werden können.

Die Aufgabe für die eingangs genannte Vorrichtung wird durch Vergleichsmittel gelöst, welche derart ausgestaltet sind, dass die ersten Ausgangssignale mit zweiten Ausgangssignalen vergleichbar sind und ein Vergleichsergebnis bereitstellen, wobei die zweiten Ausgangssignale durch das zweite Steuerprogramm, welches sich in seinem Programmcodeanweisungen von seinem Programmcodeanweisungen des ersten Steuerprogramms unterscheidet, erzeugbar sind. Gegenüber dem Stand der Technik laufen in einer speicherprogrammierbaren Steuerung und in einer Recheneinheit zeitgleich unterschiedliche Programme ab. Das erste Steuerprogramm in der Steuerung steuert fortlaufend einen technischen Prozess. In der Recheneinheit läuft ein zweites Steuerprogramm ab, welches, beispielsweise aufgrund von Optimierungen, modifiziert wurde. Um das modifizierte Steuerprogramm vor einem Laden in eine aktive Steuerung zu testen, werden der Recheneinheit die real existierenden Prozessabbilder von ersten Eingangssignalen zugeführt. Die ersten Eingangssignale dienen als Eingangsgröße für das modifizierte zweite Steuerprogramm. In der Recheneinheit wird sodann mit den ersten Eingangssignalen über das modifizierte zweite Steuerprogramm ein Prozessabbild von zweiten Ausgangssignalen bereitgestellt. Ein Ergebnis der zweiten Ausgangssignale kann sich von dem Ergebnis der ersten Ausgangssignale unterscheiden, da das Steuerprogramm modifiziert wurde. Diese Unterscheidung wird anhand von Vergleichsmitteln erkennbar. Es ist nun möglich, eine Aussage darüber zu treffen, ob die Modifikationen des zweiten Steuerprogrammes, wenn dieses in der realen Anlage abläuft, die gleichen Effekte zeigen wird bzw. die gewünschten Verbesserungen mit sich bringt. Ein Risiko eines fehlerhaft gesteuerten Prozesses aufgrund von Modifikationen an Steuerprogrammen kann somit mit Vorteil minimiert werden.

In einer weiteren Ausgestaltung der Erfindung ist es von Vorteil, wenn die Vorrichtung Ausgabemittel aufweist, welche einem Benutzer über das Vergleichsergebnis informieren. Diese Ausgabemittel können beispielsweise grafische Darstellungen auf einem Bedienbildschirm sein oder einem Anlagenbediener anhand eines Protokolls bereitgestellt werden.

Weiterhin ist es von Vorteil, wenn die Vergleichsmittel derart ausgestaltet sind, dass in Abhängigkeit von dem Vergleichsergebnis eine Aussage über ein Ausmaß der Abweichung zwischen den ersten Ausgangssignalen und den zweiten Ausgangssignalen erzeugbar ist. Somit könnte anhand des Ausmaßes über die Abweichung eine Risikoeinschätzung für ein modifiziertes Steuerprogramm, anhand von vorgebbaren Maximalgrenzen, auch automatisiert werden, wenn beispielsweise für die nicht zu überschreitenden Maximalgrenzen Toleranzwerte oder Toleranzbereiche, für Ausgangswerte aus dem Prozess vorgegeben werden.

In einer weiteren vorteilhaften Ausgestaltung weist die Vorrichtung Mittel zur Steuerung des Datenaustausches über die Schnittstelle auf, wobei der Datenaustausch zyklussynchron zu einem Ablaufzyklus des ersten Steuerprogramms oder in Abhängigkeit von einem Ereignis steuerbar ist. Insbesondere für die Steuerung von vorzugsweise Echtzeitprozessen ist es besonders wichtig, bestimmte Ausgangssignale zu einer gewissen Zeit oder in einem gewissen Zeitfenster bereitzustellen. Um auch hier eine nahezu realitätsnahe Simulation zu erreichen, ist es vorteilhaft für die Güte der Simulation, das die in der Recheneinheit simulierten Ausgangssignale zyklischsynchron mit dem Ablaufzyklus einer, beispielsweise speicherprogrammierbaren, Steuerung, errechnet werden.

Die Vorrichtung kann weiter optimiert werden, wenn sie derart ausgestaltet ist um in Abhängigkeit von dem Vergleichsergebnis das zweite Steuerprogramm in die Steuerung zu laden. Bei Beobachtung der zuvor genannten Grenzwerte bzw. Toleranzwerte könnte dieser "Download" des veränderten Steuerprogramms in die Steuerung automatisiert werden.

Die eingangs genannte Aufgabe wird ebenfalls durch ein Verfahren zur Simulation eines Steuerprogramms zum Ablauf in einer Steuerung zur Steuerung eines Prozesses gelöst, wobei in der Steuerung ein erstes Steuerprogramm zur Steuerung des Prozesses abläuft und ein Prozessabbild von ersten Eingangssignalen von der Steuerung empfangen und ein Prozessabbild von ersten Ausgangssignalen durch die Steuerung an den Prozess ausgegeben wird, wobei der Prozess dadurch aktiv gesteuert wird. Dieses Verfahren umfasst dabei die Schritte
a) Ausführen eines zweiten Steuerprogramms in einer Recheneinheit,
b) Ankoppeln der Recheneinheit an die Steuerung,
c) Empfangen der ersten Eingangssignale und der ersten Ausgangssignale in der Recheneinheit, wobei die ersten Eingangssignale dem zweiten Steuerprogramm als Eingangsgrößen zugeführt werden,
d) Erzeugen eines Prozessabbildes von zweiten Ausgangssignalen durch Programmcodeanweisungen des zweiten Steuerprogramms,
e) Vergleichen der ersten Ausgangssignale mit den zweiten Ausgangssignalen, wobei die zweiten Ausgangssignale durch das zweite Steuerprogramm auf der Grundlage der ersten Eingangssignale simuliert werden.

Mögliche Effekte einer Modifikation des zweiten Steuerprogramms bezogen auf das erste Steuerprogramm können somit zuverlässig beurteilt werden. Dynamische Reaktionen oder Veränderungen von Ablaufzeiten können somit besser eingeschätzt werden. Eine Aussage ob die Modifikation des zweiten Steuerprogramms bezogen auf das erste Steuerprogramm bei einem Ablauf in einer realen Anlage die gleichen Effekte zeigen würde, kann dadurch verbessert werden.

In einem nächsten vorteilhaften Verfahrensschritt wird ein Vergleichsergebnis bereitgestellt und mittels des Vergleichsergebnisses ein Ausmaß der Abweichung zwischen den ersten Ausgangssignalen und den simulierten zweiten Ausgangssignalen ermittelt. Die beiden Prozessabbilder, also die ersten Ausgangssignale und die zweiten Ausgangssignale, können nach Durchlauf von n Zyklen verglichen und ausgewertet werden. Zeigt sich keine Abweichung bzw. nur das gewünschte Verhalten, kann das modifizierte Steuerprogramm mit einem sehr geringen Restrisiko in ein laufendes System übertragen werden. Als laufende Systeme werden insbesondere Systeme für die Anwendung bei kritischen Prozessen angesehen, welches insbesondere fehlertolerante Systeme und fehlertolerante und hoch verfügbare Systeme sind.

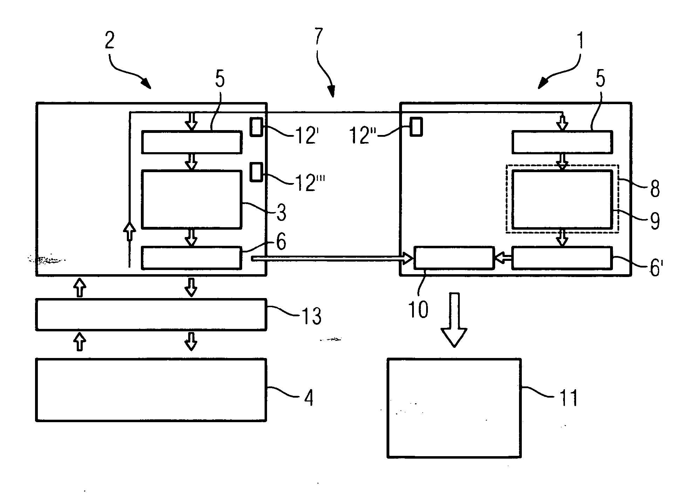

Die Erfindung wird anhand der Zeichnung durch ein Ausführungsbeispiel mit einer Figur näher erläutert.

Es zeigt die Figur eine Vorrichtung zum Zugriff auf eine Steuerung zur Simulation eines modifizierten Steuerprogramms.

Gemäß der Figur ist eine Vorrichtung 1 zum Zugriff auf eine Steuerung 2, wobei in der Steuerung 2 ein erstes Steuerprogramm 3 zur Steuerung eines Prozesses 4 abläuft, dargestellt. Der Prozess 4, welcher beispielsweise einen industriellen Prozess in der Verfahrenstechnik für eine Chemieindustrie darstellt, wird über Ein- und Ausgangssignale gesteuert. Über eine Kommunikationsschnittstelle 13, welche zwischen der Steuerung 2 und dem Prozess 4 angeordnet ist, wird der Steuerung 2 ein Prozessabbild von ersten Eingangssignalen 5 des Prozesses zur Verfügung gestellt. Die ersten Eingangssignale 5 werden mittels des ersten Steuerprogramms 3 in der Steuerung 2 verarbeitet und es werden daraufhin erste Ausgangssignale 6 zur Verfügung gestellt. Die ersten Ausgangssignale 6 bilden ein Prozessabbild an Ausgangssignalen für den Prozess 4. Die ersten Ausgangssignale 6 werden wiederum über die Kommunikationsschnittstelle 13 dem Prozess 4 zur Verfügung gestellt. Die veränderten ersten Ausgangssignale können beispielsweise in dem Prozess Ventile öffnen oder schließen vorauf sich das Verhalten des Prozesses verändert und demzufolge wiederum geänderte erste Eingangssignale 5 für die Steuerung 2 bereitgestellt werden.

Um ein modifiziertes zweites Steuerprogramm 9 zu simulieren, ist eine Vorrichtung 1 zum Zugriff auf die Steuerung 2 mit einer Recheneinheit 8 ausgestaltet. Über eine Schnittstelle 7 wird das Prozessabbild der ersten Eingangssignale 5 dem zweiten Steuerprogramm 9 als Eingangsgrößen zur Verfügung gestellt. In der Recheneinheit 8 ist nun das zweite Steuerprogramm 9 ablauffähig und arbeitet mit dem Prozessabbild des realen Prozesses als erste Eingangssignale 5.

Das modifizierte zweite Steuerprogramm 9 stellt nach Abarbeitung seiner Programmcodeanweisungen ein Prozessabbild von zweiten Ausgangssignalen 6' zur Verfügung.

Über Vergleichsmittel 10, welche derart ausgestaltet sind, das die ersten Ausgangssignale 6 mit den zweiten Ausgangssignalen 6' vergleichbar sind, wird ein Vergleichsergebnis bereitgestellt. Dieses Vergleichsergebnis wird über Ausgabemittel 11 einen Benutzer zur Verfügung gestellt. Mögliche Ausgabemittel 11 wären beispielsweise ein Bildschirm oder ein Protokolldrucker.

Weiterhin sind die Vergleichsmittel 10 derart ausgestaltet, dass in Abhängigkeit von dem Vergleichsergebnis ein Ausmaß der Abweichung zwischen den ersten Ausgangssignalen 6 den zweiten Ausgangssignalen 6' erzeugbar ist.

Die Schnittstelle 7 ist angeordnet zwischen der Steuerung 2 und der Vorrichtung 1, welche zum Ankoppeln der Recheneinheit 8 an die Steuerung 2 genutzt wird, und weist weiterhin Mittel 12 zum Steuern des Datenaustausches zwischen der Steuerung 2 und der Vorrichtung 1 auf. Die Steuerung 2 weist dabei ein erstes Kommunikationsmodul 12' und die Vorrichtung 1 weist ein zweites Kommunikationsmodul 12'' auf. Diese beiden Kommunikationsmodule 12',12 " sind vorzugsweise über eine Ethernetleitung miteinander verbunden. Diese Kommunikationsmodule arbeiten mit einem Firmwarespeicher 12''' zusammen. Der Firmwarespeicher 12"' ist vorzugsweise in der Steuerung 2 angeordnet und steuert als eine Zusatzkomponente zu einer Standard-Firmware der Steuerung 2 den zyklischen Datentransfer der laufenden Steuerung 2 zur Vorrichtung 1, welche als ein Testsystem vorzugsweise zyklussynchron das Prozessabbild der ersten Eingangssignale 5 der Steuerung 2 übernimmt und der Recheneinheit 8 zuführt. Um eine Leistungsfähigkeit der Kommunikationsverbindung zwischen den beiden Kommunikationsmodulen 12',12" zu verbessern, muss nicht zwingend der Datentransfer zyklussynchron durchgeführt werden, sondern es kann auch durch den Firmwarespeicher 12''' die Kommunikation ereignissynchron durchgeführt werden.

Hat beispielsweise ein Serviceingenieur die Vorrichtung 1 an die Steuerung 2 angeschlossen um sein modifiziertes Programm im Vorfeld zu simulieren, so kann er nach einer Analyse eines Protokolls, welches mittels der Ausgabemittel 11 zur Verfügung gestellt wurde, dass modifizierte Steuerprogramm 9 in die laufende Anlage, mit einem geringen Restrisiko übertragen. Die hier vorgestellte Erfindung löst auf vorteilhafte Weise das Problem, bei einer Veränderung eines Steuerprogramms, die Auswirkungen auf eine Anlage/einen Prozess nicht genau einschätzen zu können. Nun ist eine Möglichkeit bereitgestellt, ein Restrisiko zu minimieren, wobei ein prozessnah synchronisiertes Simulationssystem zur Risikominimierung bei Programmänderungen bereitgestellt wird.

## Patentansprüche

1. Vorrichtung (1) zum Zugriff auf eine Steuerung (2), wobei in der Steuerung (2) ein erstes Steuerprogramm (3) zur Steuerung eines Prozesses (4) abläuft und der Prozess (4) durch ein Prozessabbild von ersten Eingangssignalen (5), welche die Steuerung (2) empfängt, und ersten Ausgangssignalen (6), welche die Steuerung (2) an den Prozess (4) ausgibt, aktiv gesteuert ist, umfassend
- eine Schnittstelle (7) zum Datenaustausch mit der Steuerung (2),
- eine Recheneinheit (8) zum Ausführen von Programmcodeanweisungen eines zweiten Steuerprogramms (9),
weiterhin ausgestaltet, dass über die Schnittstelle (7) das Prozessabbild der ersten Eingangssignale (5) dem zweiten Steuerprogramm (9) als Eingangsgrößen zuleitbar sind,
**gekennzeichnet durch**
Vergleichsmittel (10), welche derart ausgestaltet sind, dass die ersten Ausgangssignale (6) mit zweiten Ausgangssignalen (6') vergleichbar sind und ein Vergleichsergebnis bereitstellen, wobei die zweiten Ausgangssignale (6') **durch** das zweite Steuerprogramm (9), welches sich in seinen Programmcodeanweisungen von den Programmcodeanweisungen des ersten Steuerprogramms (3) unterscheidet, erzeugbar sind.

2. Vorrichtung (1) nach Anspruch 1, ausgestaltet mit Ausgabemitteln (11), welche einem Benutzer über das Vergleichsergebnis informieren.

3. Vorrichtung (1) nach Anspruch 1 oder 2, wobei die Vergleichsmittel (10) derart ausgestaltet sind, dass in Abhängigkeit von dem Vergleichsergebnis eine Aussage über ein Ausmaß der Abweichung zwischen den ersten Ausgangssignalen (6) und den zweiten Ausgangssignalen (6') erzeugbar ist.

4. Vorrichtung (1) nach einem der Ansprüche 1 bis 3, mit Mitteln (12) zur Steuerung des Datenaustausches über die Schnittstelle (7), wobei der Datenaustausch zyklussynchron zu einem Ablaufzyklus des ersten Steuerprogramms (3) oder in Abhängigkeit von einem Ereignis steuerbar ist.

5. Vorrichtung (1) nach einem der Ansprüche 1 bis 4, ausgestaltet um in Abhängigkeit von dem Vergleichsergebnis das zweite Steuerprogramm (9) in die Steuerung (2) zu laden.

6. Verfahren zur Simulation eines Steuerprogramms zum Ablauf in einer Steuerung (2) zur Steuerung eines Prozesses (4), wobei in der Steuerung (2) ein erstes Steuerprogramm (3) zur Steuerung des Prozesses (4) abläuft und ein Prozessabbild von ersten Eingangssignalen (5) von der Steuerung (2) empfangen und ein Prozessabbild von ersten Ausgangssignalen (6) durch die Steuerung (2) an den Prozess (4) ausgegeben wird, wobei der Prozess (4) dadurch aktiv gesteuert wird, umfassend die Schritte
a) Ausführen eines zweiten Steuerprogramms (9) in einer Recheneinheit (8),
b) Ankoppeln der Recheneinheit (8) an die Steuerung (2),
c) Empfangen der ersten Eingangssignale (5) und der ersten Ausgangssignale (6) in der Recheneinheit (8), wobei die ersten Eingangssignale (6) dem zweiten Steuerprogramm (9) als Eingangsgrößen zugeführt werden,
d) Erzeugen eines Prozessabbildes von zweiten Ausgangssignalen (6') durch Programmcodeanweisungen des zweiten Steuerprogramms (9),
e) Vergleichen der ersten Ausgangssignale (6) mit den zweiten Ausgangssignalen (6'),
wobei die zweiten Ausgangssignale (6') durch das zweite Steuerprogramm (9) auf der Grundlage der ersten Eingangssignale (5) simuliert werden.

7. Verfahren nach Anspruch 6, wobei in einem weiteren Schritt ein Vergleichsergebnis bereitgestellt wird und mittels des Vergleichsergebnisses ein Ausmaß der Abweichung zwischen den ersten Ausgangssignalen (6) und den simulierten zweiten Ausgangsssignalen (6') ermittelt wird.

8. Verfahren nach Anspruch 7, wobei geprüft wird, ob das Ausmaß der Abweichung eine vorgebbare Grenze nicht überschreitet und danach entschieden wird, dass das zweite Steuerprogramm zum Ablauf in der Steuerung geeignet ist.

9. Verfahren nach einem der Ansprüche 6 bis 8, wobei die ersten Eingangssignale (5) der Recheneinheit (8) zyklussynchron oder in Abhängigkeit von einem Ereignis bereitgestellt werden.

## Claims

1. Apparatus (1) for accessing a controller (2), a first control program (3) for controlling a process (4) running in the controller (2) and the process (4) being actively controlled by a process image of first input signals (5), which are received by the controller (2), and first output signals (6) which are output to the process (4) by the controller (2), said apparatus comprising
- an interface (7) for interchanging data with the controller (2) and
- a computation unit (8) for executing program code instructions of a second control program (9)
and also being configured such that the process image of the first input signals (5) can be supplied to the second control program (9) as input variables via the interface (7), **characterized by**
comparison means (10) which are configured in such a manner that the first output signals (6) can be compared with second output signals (6') and provide a comparison result, the second output signals (6') being able to be generated by the second control program (9), the program code instructions of which differ from the program code instructions of the first control program (3).

2. Apparatus (1) according to Claim 1, configured with output means (11) which inform a user of the comparison result.

3. Apparatus (1) according to Claim 1 or 2, the comparison means (10) being configured in such a manner that a statement relating to an extent to which the first output signals (6) differ from the second output signals (6') can be generated on the basis of the comparison result.

4. Apparatus (1) according to one of Claims 1 to 3, having means (12) for controlling the interchange of data via the interface (7), the interchange of data being able to be controlled in a cycle-synchronous manner with respect to a run cycle of the first control program (3) or on the basis of an event.

5. Apparatus (1) according to one of Claims 1 to 4, configured to load the second control program (9) into the controller (2) on the basis of the comparison result.

6. Method for simulating a control program which is intended to run in a controller (2) for controlling a process (4), a first control program (3) for controlling the process (4) running in the controller (2) and a process image of first input signals (5) being received by the controller (2) and a process image of first output signals (6) being output to the process (4) by the controller (2), the process (4) being actively controlled thereby, said method comprising the steps of
a) executing a second control program (9) in a computation unit (8),
b) coupling the computation unit (8) to the controller (2),
c) receiving the first input signals (5) and the first output signals (6) in the computation unit (8), the first input signals (6) being supplied to the second control program (9) as input variables,
d) generating a process image of second output signals (6') by means of program code instructions of the second control program (9),
e) comparing the first output signals (6) with the second output signals (6'),
the second output signals (6') being simulated by the second control program (9) on the basis of the first input signals (5).

7. Method according to Claim 6, a comparison result being provided in a further step and an extent to which the first output signals (6) differ from the simulated second output signals (6') being determined using the comparison result.

8. Method according to Claim 7, a test being carried out in order to determine whether the extent of the difference does not exceed a predefinable limit, and it then being decided that the second control program is suitable for running in the controller.

9. Method according to one of Claims 6 to 8, the first input signals (5) of the computation unit (8) being provided in a cycle-synchronous manner or on the basis of a result.

## Revendications

1. Dispositif ( 1 ) d'accès à un automate ( 2 ), dans lequel un premier programme ( 3 ) de commande d'une opération ( 4 ) se déroule dans l'automate ( 2 ) et l'opération est commandée d'une manière active par une reproduction de l'opération par des premiers signaux ( 5 ) d'entrée que l'automate ( 2 ) reçoit et par des premiers signaux ( 6 ) de sortie que l'automate ( 2 ) envoie à l'opération ( 4 ), et comprenant :
- une interface ( 7 ) d'échange de données avec l'automate ( 2 ),
- une unité ( 8 ) informatique d'exécution d'instructions de code de programme d'un deuxième programme ( 9 ) de commande,
conformé, en outre, en ce que, par l'interface ( 7 ), la reproduction de l'opération des premiers signaux ( 5 ) d'entrée peut être envoyée comme grandeur d'entrée au deuxième programme ( 9 ) de commande,
**caractérisé par**
des moyens ( 10 ) de comparaison, qui sont conformés de manière à ce que les premiers signaux ( 6 ) de sortie puissent être comparés à des deuxièmes signaux ( 6' ) de sortie et de manière à ce qu'un résultat de la comparaison soit à disposition, les deuxièmes signaux ( 6' ) de sortie pouvant être produits par le deuxième programme ( 9 ) de commande, qui se distingue par ses instructions de code de programme des instructions de code de programme du premier programme ( 3 ) de commande.

2. Dispositif ( 1 ) suivant la revendication 1, ayant des moyens ( 11 ) d'émission, qui informent un utilisateur du résultat de la comparaison.

3. Dispositif ( 1 ) suivant la revendication 1 ou 2, dans lequel les moyens ( 10 ) de comparaison sont tels que, en fonction du résultat de la comparaison, une prédiction sur une valeur de l'écart entre les premiers signaux ( 6 ) de sortie et les deuxièmes signaux ( 6' ) de sortie peut être produite.

4. Dispositif ( 1 ) suivant l'une des revendications 1 à 3, comprenant des moyens ( 12 ) de commande de l'échange de données par l'interface ( 7 ), l'échange de données pouvant être commandé en synchronisme de cycle avec un cycle de déroulement du premier programme ( 3 ) de commande ou en fonction d'un événement.

5. Dispositif ( 1 ) suivant l'une des revendications 1 à 4, conformé pour, en fonction du résultat de la comparaison, charger le deuxième programme ( 9 ) de commande dans l'automate ( 2 ).

6. Procédé de simulation d'un programme de commande se déroulant dans un automate ( 2 ) de commande d'une opération ( 4 ), dans lequel un premier programme ( 3 ) de commande de l'opération se déroule dans l'automate ( 2 ) et une reproduction de l'opération par des premiers signaux ( 5 ) d'entrée est reçue dans l'automate ( 2 ) et une reproduction de l'opération par des premiers signaux ( 6 ) de sortie est envoyée à l'opération ( 4 ) par l'automate ( 2 ), l'opération ( 4 ) étant ainsi commandée de manière active, comprenant les stades dans desquels :
a) on exécute un deuxième programme ( 9 ) de commande dans une unité ( 8 ) informatique,
b) on relie l'unité ( 8 ) informatique à l'automate ( 2 ),
c) on reçoit les premiers signaux ( 5 ) d'entrée et les premiers signaux ( 6 ) de sortie dans l'unité ( 8 ) informatique, les premiers signaux ( 6 ) d'entrée étant envoyés comme grandeurs d'entrée au deuxième programme ( 9 ) de commande,
d) on produit une reproduction de l'opération par des deuxièmes signaux ( 6' ) de sortie par des instructions de code de programme du deuxième programme ( 9 ) de commande,
e) on compare les premiers signaux ( 6 ) de sortie aux deuxièmes signaux ( 6' ) de sortie,
dans lequel on simule les deuxièmes signaux ( 6' ) de sortie par le deuxième programme ( 9 ) de commande sur la base des premiers signaux ( 5 ) d'entrée.

7. Procédé suivant la revendication 6, dans lequel, dans un autre stade, on met à disposition un résultat de comparaison et, au moyen du résultat de la comparaison, on détermine une valeur de l'écart entre les premiers signaux ( 6 ) de sortie et les deuxièmes signaux ( 6' ) de sortie simulés.

8. Procédé suivant la revendication 7, dans lequel, on contrôle si la valeur de l'écart ne dépasse pas une limite pouvant être prescrite et on en décide que le deuxième programme de commande est propre à se dérouler dans l'automate.

9. Procédé suivant l'une des revendications 6 à 8, dans lequel on met les premiers signaux ( 5 ) d'entrée à disposition de l'unité ( 8 ) informatique en synchronisme avec un cycle ou en fonction d'un événement.
